# EUROPEAN PATENT APPLICATION

(11) **EP 0 655 377 A2**
(43) Date of publication of application: **31.05.1995**
(21) Application number: 94118444.2
(22) Date of filing: 24.11.1994
(51) Int. Cl.: B60T 17/04, F16L 33/00

(54) **Hose sleeve for hydraulic brakes**

(30) Priority: 25.11.1993 IT MI930918 U
(71) Applicant: ALLEGRI CESARE S.p.A., I-20099 Sesto San Giovanni (MI) (IT)
(72) Inventor: Allegri, Claudio, I-20125 Milan (IT)
(74) Representative: Gervasi, Gemma, Dr.

(57) **Abstract**

A rubber or plastic sleeve (6) is described which, once mounted on a flexible hose (1) for hydraulic brakes in coincidence with the hose connections, improves its resistance to mechanical, thermic and environmental stress, thus allowing the flexible hose (1) to get through the fatigue test foreseen by the type-testing rules in force for said kind of hoses.

## Description

### FIELD OF THE INVENTION

The present invention consists of a sleeve (made of plastics or rubber) which, once mounted on a flexible hose for hydraulic brakes in coincidence with the hose connections, improves its resistance to mechanical, thermic and environmental stress thus allowing the flexible hose to get through the fatigue test foreseen by the type-testing rules in force for this kind of hoses.

### PRIOR ART

Flexible hoses for high- and low-pressure fluids are known in the Art and widely used as particularly demanding devices such as, for instance, braking systems for racing vehicles (particularly motorbykes and racing cars) or off-roads, chemical and pharmaceutical devices working by means of high-pressure fluids, and so on.

Among the known types of flexible hoses, the most advantageous are those consisting of a hose made of plastic or rubber provided with an outer sheath made of woven metal wire or of textiles, said sheath conferring to the flexible hose a high resistance to pressure and the faculty of being bent without danger of flattening.

A further type of hose connections are also known in the Art which, once mounted on both ends of a flexible hose, allow the connection of said hose to two elements (e.g. a pump for the braking system and, respectively, one of the braking systems) connected by means of said flexible hose, with no pressure or fluid loss.

Among the known types of hoses the most efficient is the one described in EP 0 258 524 consisting of a metal coupling comprising a shank with suitably shaped seats on which one end of the flexible hose (preferably the kind coated with metal sheath) is inserted by pressure and of an outer metal sleeve which, once tightened against the flexible hose by means of punches or by another equivalent means, blocks said hose in the seats made in the shank of the metal coupling.

Flexible hoses equipped with the aforesaid hose connection have been successfully used for a long time in braking systems for racing vehicles but they are not used for hydraulic brakes in normal vehicles since they are not type-tested for this use.

The rules presently in force for type-testing of hydraulic brakes such as, for instance, the American rule SAE J 1401 cited as a reference in the present description, foresee getting through several tests among which there is a fatigue test. Said fatigue test briefly consists in fastening the hose connection linked to one end of the flexible hose to a fixed point and in fastening the hose connection linked to the other end of the flexible hose to a mobile body having a constant rotary motion (a disc or a rod fixed to two points on the edge of two identical discs); the hose, put under pressure and stressed by rotary bending by means of the rotary motion of the mobile body for a prefixed lapse of time must not show signs of weariness.

It has been noticed that a flexible hose of the known type equipped with the hose connection described in the aforesaid European patent can easily get through the other type-testing tests, but during the fatigue test its outer sheath tends to superheat and to give way in coincidence with the point of junction with the outer sleeve of said hose connection, thus causing the giving in of the hose which therefore cannot be type-tested for commercial vehicles.

The object of the present invention is a sleeve made of plastics or rubber which, once mounted on a flexible hose for hydraulic brakes in coincidence with the hose connections, improves the hose resistance to mechanical, thermic and environmental stress, thus allowing the flexible hose to get through the fatigue test and to be type-tested for commercial vehicles.

Said hose sleeve can be used together with standardized flexible hoses (the inner diameter of which is between 3.2 mm and 6.5 mm) or with not standardized ones.

### SUMMARY OF THE INVENTION

The object of the present invention is a hose sleeve for hydraulic brakes provided with at least a hose connection: said sleeve consists of a cylindrical main body (made of plastics or rubber and having an inner diameter not smaller than the outer diameter of the flexible hose and not bigger than the outer diameter of the hose connection) mounted by pressure on the outer side of the flexible hose in coincidence with the hose connection.

The cylindrical main body is about 12.5 times as long as the inner diameter of the flexible hose and, in any case, 9-16 times as long as said inner diameter.

### LIST OF FIGURES

The invention will be now better described with reference to an embodiment, which is not limiting, showed in the enclosed figures, wherein
- figure 1 shows a flexible hose having a hose connection of the known type;
- figure 2 shows the flexible hose of figure 1 equipped with a sleeve according to the invention;
- figure 3 shows the flexible hose of figure 2 in a cross-section along plane A-A.

### DETAILED DESCRIPTION OF THE INVENTION

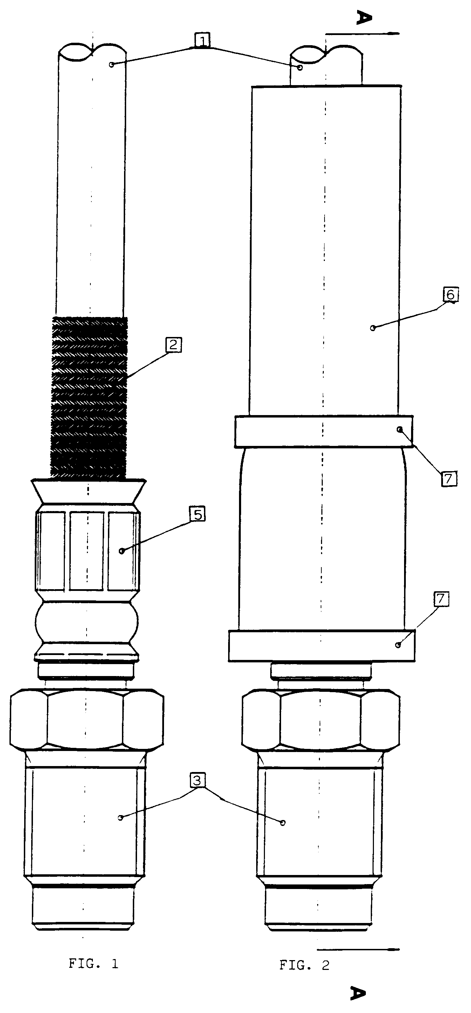

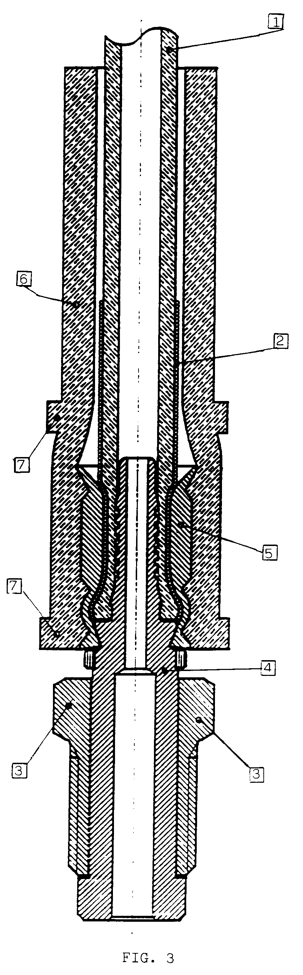

Figure 1 shows a flexible hose 1 provided with an outer sheath 2, preferably made of twisted metal wire, extending along the whole length of said flexible hose 1; said flexible hose 1 is coupled with a hose connection, as described in EP 0 258 524, consisting of a metal coupling 3 which comprising a shank 4, on which one end of the flexible hose 1 is inserted by pressure, and of a metal sleeve 5, in a known way tightened against the flexible hose 1. Said flexible hose 1 and the relative sheath 2 are blocked by means of said sleeve 5 in the seats placed on shank of metal coupling 3. Shank and the seats provided on its surface are shown in the cross-section view of figure 3.

Figure 2 shows the flexible hose 1 equipped with the aforesaid hose connection and with a further sleeve 6 built up according to the invention, consisting of a cylindrical main body (having also reference number 6 in figures 2-3) made of rubber or plastics. Said sleeve 6 is mounted on said flexible hose 1 before the hose connection and it is then mounted by pressure on sleeve 5 belonging to the hose connection as better described referring to the cross-section view of figure 3.

Flanges 7, existing on the outer surface of sleeve 6, ease the mounting of the sleeve on the hose connection. However, remaining within the scope of the invention, it is possible to use a sleeve 6 lacking said flanges 7. Experimentally it has occurred that a sleeve 6 mounted on a flexible hose 1 for hydraulic brakes allows said flexible hose 1 to get through the fatigue test previously described only if the ratio between the length of sleeve 6 and the inner diameter of flexible hose 1 is comprised between 9 and 16, preferably between 10 and 15. Furthermore, the best conditions for getting through the fatigue test occur if the length of the sleeve 6 is ca. 12.5 times as long as the inner diameter of flexible hose 1 equipped with said sleeve 6.

For instance, the preferred length of a sleeve 6 mounted on a flexible hose 1 for standardized hydraulic brakes having an inner diameter of 3.2 mm is about 40 mm, however said flexible hose is able to get through the fatigue test only if the length of sleeve 6 is comprised between 28 and 52 mm, preferably between 32 and 48 mm.

Figure 3 shows a cross-section along plane A-A of the flexible hose shown in figure 2. Since figure 3 shows the gap between the sheath 2 and the inner wall of sleeve 6, it is possible to notice that the inner diameter of sleeve 6 is bigger (or anyway not smaller) than the outer diameter of flexible hose 1 but smaller (or anyway not bigger) than the outer diameter of metal sleeve 5 of the hose connection.

Sleeve 6, mounted on flexible hose 1 before the hose connection, can therefore freely slide along flexible hose 1 in order to be pushed against the hose connection, but the user must force said sleeve 6 in order to mount it by pressure on said hose connection thus causing a elastic deformation of sleeve 6, said deformation being in case bounded by flanges 7.

Remaining within the scope of the invention, a person skilled in the art can modify and better the flexible hose sleeve for hydraulic brakes object of the present description by means of all changes and Improvements suggested by normal practise and technical progress.

## Claims

1. Hose sleeve for hydraulic brakes, provided with at least a hose connection, characterized by the fact that it consists of a cylindrical main body (6), having an inner diameter not smaller than the outer diameter of said flexible hose (1) and not bigger than the outer diameter of said at least a hose connection, and characterized by the fact that the length of said cylindrical main body (6) is between 9 and 16 times as long as the inner diameter of said flexible hose (1).

2. Sleeve according to claim 1, characterized in that the length of said cylindrical main body (6) is between 10 and 15 times as long as the inner diameter of said flexible hose (1).

3. Sleeve according to claim 1 characterized in that said cylindrical main body (6) is 12,5 times as long as the inner diameter of said flexible hose (1).

4. Sleeve according to claim 1, characterized in that it is mounted by pressure on the outer side of said flexible hose (1) in coincidence with said at least a hose connection.

5. Sleeve according to claim 1, characterized in that said cylindrical main body (6) is made of rubber.

6. Sleeve according to claim 1, characterized in that said cylindrical main body (6) is made of plastics.
